(19)

Europäisches
Patentamt
European
Patent Office
Office européen
des brevets

(11) **EP 2 648 115 A1**

(12) **EUROPEAN PATENT APPLICATION**

(43) Date of publication:
**09.10.2013 Bulletin 2013/41**

(51) Int Cl.:
***G06F 17/30*** (2006.01)

(21) Application number: **12162971.1**

(22) Date of filing: **03.04.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Seeburger AG**
**75015 Bretten (DE)**

(72) Inventor: **Dr. Weiten, Moritz**
**76227 Karlsruhe (DE)**

(74) Representative: **Patentanwälte**
**Westphal, Mussgnug & Partner**
**Am Riettor 5**
**78048 Villingen-Schwenningen (DE)**

(54) **Method and/or system for the execution of transformations of hierarchically structured data and relational data**

(57)    The invention subject to this document describes methods for data transformations for hierarchical documents and relational databases. Data transformations ensure the interoperability between different organisations as well as different tools. The XQuery-standard is an example for a language that allows to create such transformations. The invention claimed is suited to interpret and execute XQuery-defined transformations. It comprises methods that can also be applied on other transformation languages. A procedure is described that includes the compilation of mappings into a set of interconnected operators exchanging data in form of tuple streams, including several optimizations to improve the performance of the basic procedure and reduce memory- as well as hard-disk consumption.

Fig. 3:    **Processing schema**

**Description**

<u>Technical field</u>

The present invention relates to the fields of data processing and, more particularly, to methods and/or systems for the transformation of data that is either structured hierarchically or in form of tables as in relational database systems. Typical applications of this kind of transformation include but are not limited to EDI ("Electronical Data Interchange") or B2B ("Business to Business") - Systems as well as EAI ("Enterprise Application Integration"). More specifically, this invention relates to transformations defined against an explicit or implicit schema for the data to be processed ("schema mapping"). The definition of a transformation is part of a development or configuration process taking place "offline", whereas the execution of the transformation is taking place "online" in a productive system or a comparable environment. In a transformation, one ore more source data sets that comply with a relational or hierarchical schema are transformed into target data sets that comply with a different schema. A transformation is typically defined with the help of a language with a formal interpretation, henceforth called "transformation language". Transformation languages include the XML standards XSLT and XQuery. A query language such as SQL might also be used as a transformation language, since it can be used to re-structure information contained in a database. Example embodiments disclosed are based on the XQuery and the XPath syntax. However, the invention present is not limited to the execution of XQuery-transformations.

<u>Background of the invention</u>

Data transformations are a frequent requirement in data processing due to structural incompatibilities that need to be bridged. Typical cases include the exchange of data across the boundaries of institutions/organisations such as companies, departments, small enterprises, agencies etc. as well as the migration of data due to changes in the infrastructure. Thus transformations ensure the interoperability between different organisations and tools. A transformation does typically not affect or change the semantics of the data transformed but its form.

A common use case for transformations is the Electronic Data Interchange (EDI). EDI comprises the transmission of structured, often standardized messages between organizations by electronic means. This includes for example the processing of business data by trading partners. The exchange of electronic messages very often involves the use of different formats and schemas for semantically identical messages. An "invoice message" can be represented in various forms, depending on the supported formats and standards, while the content remains (almost) the same. A trading partner A sends a message to trading partner B containing one or more orders or invoices. Partner A stores and processes orders/invoices in a certain format, which includes a defined syntax and a defined schema. Partner B uses different formats for the same sort of business data. Whenever A receives orders or invoices from B or vice versa, a transformation is needed.

Other applications include the merging, filtering and aggregation of data from different, heterogeneous sources e.g. for the purpose of performing analysis. Data contained in a relational database might have to be compared to or aggregated together with semantically related data coming from a different source such as a set of XML documents.

Specialized software programs - which are often labelled "coverter-" or "mapping software" - are used to translate between the different formats. In order to enable those programs to translate/convert/transform electronic messages correctly, the translation has to be defined against the expected structure of the message prior to its application at runtime. In most cases the possible structures of electronic messages are implicitly defined by a message schema.

The definition of a translation can be based on different kinds of technologies/paradigms:

■ using common imperative programming languages like C++, Java™ or alike;

■ using functional, template-based languages like XSLT, XQuery;

■ using rule-based and/or logical languages like Prolog.

Transformations are often defined by means of writing code in the syntax defined by the chosen language. Some technologies support the graphical definition of translations.

<u>Advantages of the Invention</u>

The claimed technology represents a hybrid approach combining functional and logical aspects, optimized for hierarchically structured messages.

General Advantages

The invention claimed is applicable for data transformations using hierarchical documents - especially XML - and relational databases as input. It thus offers a unified processing model for hierarchical data formats like XML, EDIFACT, ANSI X12 on one hand and relational data on the other hand.

The interpretation of the transformation language is realized in such a way that the amount of data buffered (either in memory or on a hard disk) is automatically reduced to a minimum. Operators work in a streaming mode with tuple streams as input.

Another advantage of the invention claimed is that hierarchical data is processed in such a way that only the subset of data that is really needed for the transformation is read from a data stream.

Operator-based approaches for relational databases or logical languages

Operator- based approaches for relational databases and for logical languages (e.g. EP 1 990 741 A1) are not suited for the processing of hierarchical document as a data- stream. They do not exploit the metadata available regarding the order of values or nodes. The invention described allows for special optimization such as context- based operators, where the context is a common ancestor- node. It reduces the amount of data that needs to be buffered when transforming to operations where there is logically no alternative (e.g. sorting, joins) .

XQuery technology

Implementations capable of processing/executing XQuery expressions or modules can be categorized in two different types: XQuery databases and XQuery transformation engines. XQuery databases work on a persisted form of the XML-data (e.g. EP 1 986 108 A1). They maintain indices in order to optimize the performance of certain operations at runtime. XQuery databases are not suited for transformation services transforming documents on-the-fly upon request, since the complete set of data would have to be stored in the database before the transformation can start. XQuery engines on the other hand do not work on an operator model that can seamlessly be combined with relational databases as data source. The present invention overcomes these problems.

General Schema Mapping

There are schema- mapping technologies that generate code for a target- platform like an SQL- database out of mappings (e.g. US 7, 149, 746) . Those technologies do not offer their own operationalization for the execution of mappings but rely on the respective target- platform. The invention described can combine its own operator- model with an external relational database and operate on both.

As indicated above the prior art technologies exhibit several problems. It is an object of the present invention to overcome these problems and to provide an improved method and system for the execution of transformations of hierarchically structured data and relational data.

According to the present invention a method is claimed to execute transformations for hierarchically structured documents or data sets stemming from a relational database system based on a declarative transformation expressions containing at least a step of compiling a set of transformation expressions into a set of normalized expressions with reduced expressivity; Further more a step of transforming the normalized expressions into a set of pre-configured interconnected standard-operators, wherein for hierarchical documents a document is read and transformed into a tuple-stream and wherein for relational databases parts the transformation are transformed. The tuple-streams are passed between the operators and tuples are filtered, transformed and generated in order to produce a result according to the transformation defined at compile time. Finally the tuple-stream is ordered and serialized to a desired target-format and a desired target-structure.

The use of operators and tuple-streams permits that every data structure that can be represented hierarchically can be used to apply the method according to the present invention. The general structure of reading the data structure into tuple-streams, restructuring the data using the tuple-streams, and writing the tuple-streams back to hierarchically structured data represents an overall approach that is applicable for all data transformations using hierarchical documents, especially XML, and relational databases as input. It offers a unified processing model for hierarchical data formats. Preferred hierarchical data formats are for example XML, EDIFACT, and ANSI X12.

In a preferred embodiment of the method the sets of tuples include type- and position-data.

The inclusion of type and position data in the tuple-sets brings the advantage that the hierarchy and the relations of the input data in the source document can be represented easily within the tuples. Furthermore by restructuring the tuples it is possible to generate a hierarchically structured or relational output document. Preferably every tupelo contains a position value representing the position of the contained dates within a certain context.

In another embodiment the method further includes a step of normalizing path-expressions by eliminating sideways movements and externalizing inline filter-expressions.

By normalization of path expressions it is possible to describe the whole transformation with a reduced set of core-expressions that are interpreted in a very similar way as rules in logic-based languages or in relational database systems.

In a further embodiment the method further includes a step of generating a stream of tuples out of hierarchical documents using an event-based approach whereas each tuple is associated with a data type which can be either explicitly defined by a schema or implicitly defined by a path-expression.

Data types can be explicitly defined by a schema using e.g. the XSD-standard or a similar kind of schema-definition. Implicitly defined data types may be defined by path expressions using e.g. the XPath-standard, a subset of it or a similar path-expression language.

In a preferred embodiment the method further includes a step of eliminating references to data-types (associations of data sets with types) using strings by replacing them with numeric identifiers.

By using numeric identifiers instead of strings type comparisons can be made more efficient because a reduced subset of signs can be compared faster and more efficient.

Another embodiment of the method further includes the step of registering the operators against a normalized form of path-expression

The method can further include a pattern-match and check step if a registered operator is to be notified about tuples it should receive.

In a further embodiment, the pattern match step includes a check for recursive path-patterns.

This means, if schema is given, a static analysis checks all branches within this schema where the pattern could match in principle. The respective source-operators receive tuple-events for all elements that appear in one of the branches. The pattern match step in the most general case works with recursion and elements that can occur anywhere in a path.

In another embodiment of the method a further step is to analyze a transformation definition at compile-time and optimize the pattern match accordingly for path-expressions that are known to exclude recursion.

If a schema is available that provides information about the order in which data is provided, this information can be exploited by the compiler and at runtime. The pattern match can be optimized for path expressions that are known to exclude recursion.

It is furthermore possible that the method includes a step of optimizing the exchange of data between operators and generating tuples of different arities (lengths) by using a combination of a push- and a pull-approach.

The method can furthermore use "virtual" tuples for the exchange of data between operators according to avoid the use of unnecessary resource consumption.

Generally every operator produces and consumes tupels. However this implies that many tupels, e.g. represented by data arrays, have to be stored. The consumption of resources, e.g. memory can be reduced, if only operators that buffer data create tupels in form of arrays. Thus only sorting- and joining-operators need to create and save data arrays.

Furthermore it is possible that the method further delegates parts of the transformation to the underlying database if the source input is a relational database.

Relying on operations based on tuple-streams allows the compiler and the operators to delegate operations to an underlying database, if it is a source of a transformation. Many operations such as filters and joins can be expressed using SQL-statements. To exploit the capabilities of an underlying database the compiler generates SQL-expressions comprising one ore more transformation expressions and attaches them to source-operators for database-access. Additional operators are only needed for the operations a database cannot perform such as the serialization into a target-document, the combination with data not contained in the database or the application of functions not available in the database.

The method can further optimize join-operations by exploiting the reading order of hierarchical documents.

If two values have to be joined according to the above the join- or concatenation operator has to buffer data in order to collect the data to be joined. If a schema is available that provides information about the order in which data is provided, e.g. value 1 is always provided before value 2, only value 1 has to be buffered and as soon as value 2 is read the joined tupelo can be delivered. Furthermore, if value 2 is read without value 1 being in the buffer, the tupel is known to be incomplete.

In another embodiment of the method the amount of buffering of tuples stemming from a tuple-stream into memory or on disk is optimized by exploiting the information available through the schema.

Exploiting the schema at this point means that the above-mentioned reading order, which can be given by the schema, is derived there from in order to perform the above optimization.

According to the present invention a transformation system to execute data transformations includes at least a transformation interpreter comprising a compiler, readers for documents, a database connector, standard operators to read, filter and generate tuples and a runtime container managing all components mentioned apart from the compiler, wherein the compiler generates sets of interconnected operators out of a transformation definition, a generator for SQL-expressions out of transformation expressions as part of the compiler and a set of readers capable of generating tuple-streams out of hierarchical documents.

In another embodiment of the transformation system, the readers include at least a reader for XML-documents, a reader for delimiter-based documents including EDIFACT and ANSI X12 and a reader for fixed-length formats including VDA and typical inhouse formats.

The above method can be operationalized by a computer program.

Accordingly the computer program can be stored on a data carrier.

An exemplary embodiment of the present invention is described below with reference to the attached drawings.

Shown are:

Fig. 1: A simplified diagram showing the transformation of messages with hierarchical data structures,

Fig. 2: A overall workflow

Fig. 3: A processing schema for a transformation form a source to a target schema,

Fig. 4: A processing sequence for hierarchical data,

Fig. 5: The processing of hierarchical data sets as tuple-stream,

Fig. 6: The exchange of data between operators using position mappings,

Fig. 7: The partitioning of partial transformations

Fig. 8: A schema for a Sort-Join operation of two Tuple-Streams and

Fig. 9: A general Path-Matching Procedure.

Detailed Description

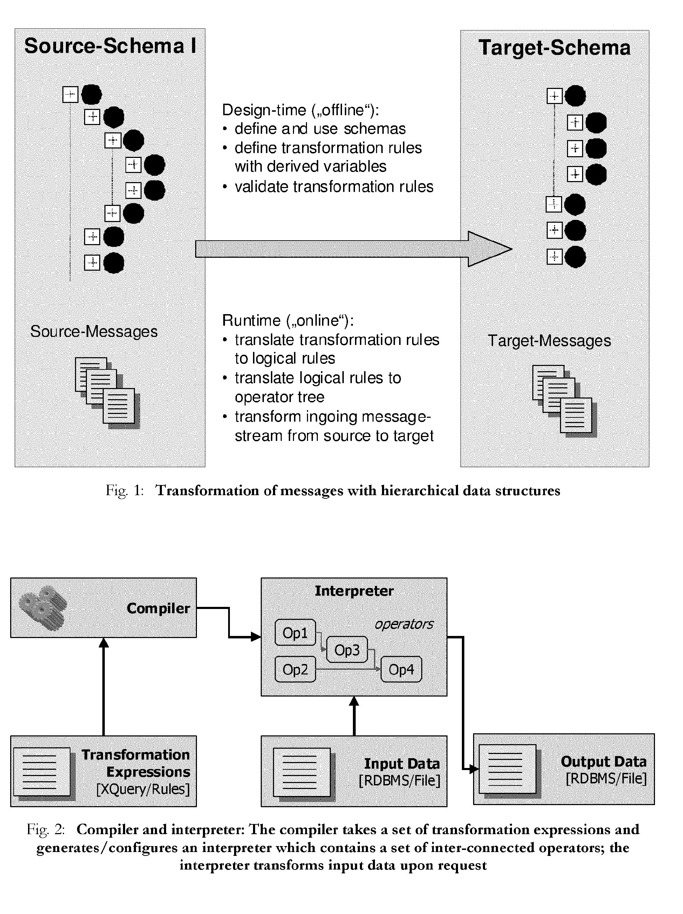

Figure 1 illustrates the different aspects of the invention described. A source-schema defines how messages of a certain kind (e.g. "invoice messages") can be structured. Prior to the application of a transformation program at runtime, transformation rules have to be defined (at design time). A dedicated component translates expressions of a transformation language such as XQuery into transformation rules. A transformation rule defines how a set of tuples is derived out of other sets of tuples, very similar to SQL-queries or views. Internally rules are represented by operators exchanging data.

At design time so called schemas are defined and used to define transformation rules with derived variables. Subsequently these transformation rules are validated.

At runtime the transformation rules defined at design time are translated to logical rules. The logical rules are translated to an operator tree which is used to transform an ingoing message-stream from source-messages to target messages.

The workflow is illustrated in Figure 2: a compiler takes a set of transformation expressions and generates a set of inter-connected operators contained in an interpreter. The interpreter is then capable to transform input data into output data or input messages into output messages, respectively. Operators receive data from a source data set and pass it to subsequent operators if certain criteria apply, such as a certain pattern-match.

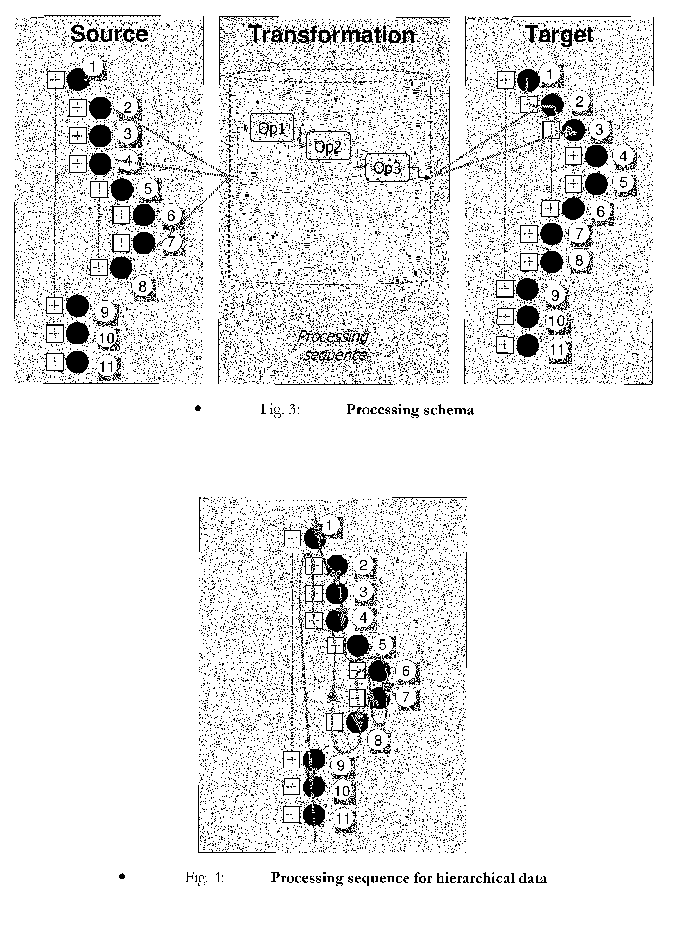

Figure 3 shows the processing from another perspective. Certain operators generated/configured by the compiler receive data from a reading component, such as a parser for files or a database-connection. The compiler decides which kind of data (which data-types) are relevant for the particular operator and registers them to receive the respective subset of the input data.

General Procedure

The prodecure can be described as follows:

■ A set of expressions is created by a user to describe/define a transformation based on the XQuery standard or a custom rule syntax, possibly reusing existing transformation definitions.

■ A compiler triggered by the user translates the expressions into a component capable of executing a transformation on a given data source, which can be a set of documents or a database. The generated component includes a set of interconnected operators to read, filter and generate tuples.

■ The compiler performs the following steps:

- Setting up a reader or database connector depending on the format of source data;

- Reading the expressions defining the transformation;

- Normalizing the expressions into a set of expressions with reduced expressivity compared to the XPath- and XQuery-standard;

- Selecting predefined operators, connecting and configuring them; with the exception of "source operators" every operator is connected to an operator it receives data from. A "source operator" is an operator registered against a certain pattern to receive data directly from the reader or database adapter. The pattern is a normalized path-expression based on a subset of the XPath-standard (excluding sideways-movements);

- Attaching the operators to a container-component managing the transformation process;

■ The managing component containing the operators is triggered by an external process or by the user to take a given input and execute the transformation that has been defined.

■ The component triggers the reader to read the document (alternatively the database connector is called to query the database);

■ The reader generates tuples and notifies the managing component;

■ Out of all registered source operators the managing component retrieves the relevant ones for a given data type within a single tuple (document case) or a set of tuples (database case) and passes the tuples to those operators together with the actual path that has led to the values (the type-stack);

■ Source- operators receive tuples and the associated path (type- stack) and check the path against the pattern attached to them; if the path matches, tuples are passed to subsequent operators;

■ Other operators receive tuples, and perform an operation such as filtering a single tuple-stream, applying a function onto values within tuples from a tuple-stream, joining tuples from two different tuple-streams, sorting tuple-streams and serializing tuple streams into documents.

The description above covers a basic setting without optimizations. The following sections give some background information on this procedure. Subsequent sections cover optimizations for some of the steps.

Normalization

The invention claimed is capable of processing data based on transformations using XQuery or other languages defining transformations declaratively. The actual transformation expressions are normalized using a set of core-expressions. Those core-expressions are interpreted in a very similar way as rules in logic-based languages (Datalog) or in relational database systems.
The following example illustrates the normalization. Path-expressions with filters are not part of the core-expressions:

```
Let $x := //a/b/c[d='val'];
```

The normalization process transforms this into:

```
Let $x0 := //a/b/c

Let $x1 := $x0/d

Let $x := $x0 with related $x1='val';
```

As the example shows, the normalization process ends up with additional expressions. Core-expressions do exclude filters within a path, thus the path-expression with a filter has been resolved into a set of expressions that is equivalent to the original expression. The last expression is a core-expression that has no counter-part in XPath or XQuery. It preserves the relation between $x0 and $x1, using both in a filter-expression. In logical languages, this would be done using predicates.

The normalized expressions are interpreted in such a way that whenever both, $x0 and $x1 are used in another expression, they occur in tuples [$x1, $x0].

Tuples

Every transformation is based on tuple-streams. A tuple-stream is a sequence of events where each event contains data representing a single tuple. During a transformation tuples of different arities (lengths) are generated and processed. However, every tuple always contains a position value, representing the position of the contained dates within a certain context. In addition there is a special kind of tuple that occurs at the beginning and at the end of a transformation process. This tuple is used to represent hierarchically structured, ordered data. The underlying schema is as follows:

```
[value, parent, type, position]
```

Value can be any primitive value such as a string but also identifier values for nodes. Parent is always an identifier value representing the parent or "owner" of a value. The type entry refers to the data type of the primitive value or node. Finally position represents the position of the value relative to its parent.

Whenever a document is read, this kind of tuple is generated for all data contained. In case of relational databases tuples are generated that contain at least those entries, whereas the data type refers to the table record are read from and parent refers to another record, usually (but not necessarily) based on foreign keys.

As an example the following XML-document is considered:

```
<a>

    <b att='val1' />

    <b att='val2' />

</a>
```

The generated tuples are:

```
[value, parent, type, position]


[1     , 0      , a   , 0        ]

[2     , 1      , b   , 0        ]

[val1 , 2       , att , 0        ]

[3     , 1      , b   , 1        ]

[val2 , 3       , att , 0        ]
```

In this example the type was symbolized by a string for illustration purposes. The invention described uses numeric identifiers that are associated with the original element- or attribute-names.

The identifiers 1, 2 and 3 in the value-position (first column) represent the a- and the two b-nodes. Identifiers are generated automatically to distinguish nodes. The identifier 0 is a special value representing the document root. The position value is generated according to the reading order.

In the case of a relational database "source-tuples" originate from a generated SQL-query. The type-value refers to a column if the respective value is a primitive and to a table if the value is interpreted as a complex type (node). The process requires that the underlying database-schema is mapped onto a schema. This mapping defines which relations (based on keys) are to be interpreted as parent-child relationships.

Operators

Every operator

■ represents a certain kind of tuple it can produce,

■ passes zero to any tuples in each transformation process,

■ is connected to n operators it receives data from (with n ranging from zero to any),

■ is connected to n operators it provides data for (with n ranging from zero to any),

■ internally accesses values by positions equivalent to the positions of terms in the tuple,

■ can virtually extend an existing tuple (provided by preceding operators).

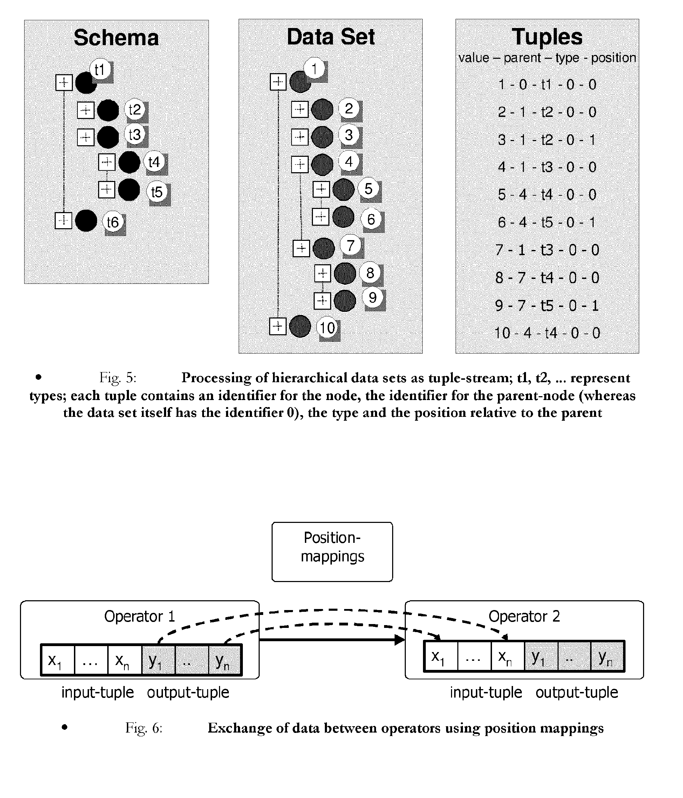

The exchange of data between operators is shown in Figure 6. Operators exchange data based on position-mappings. For each operator-to-operator connection a mapping of positions is set up by the compiler. At runtime, operators access values of other operators via those position-mappings.

The processing of data starts with a reading operation, which can be the result of a database query or the parsing of a hierarchical (tree- shaped) document such as an XML- file. In each case a stream of tuples is created. In the case of the hierarchical document, tuples are produced according to the schema illustrated in Figure 5. Every tuple contains a node- identifier or a primitive value (such as a date, number or string), its container- or parent- identifier, its position relative to the parent and its type according to a defined schema, if available. Thus, data structures are encoded into tuples by referring to the parent- node. As an intermediate step of a transformation, any sort of tuple can be produced by operators. The target- data however is created by a special sort of tuple which has the same structure as the tuples generated from the reading- process (node/ value, parent, ...) .

Any data structure that can be represented hierarchically can be used to apply the present technology, including relational database schemas. In such data structures there are nodes that have properties (quantified by atomic values) and child-nodes. A relational database can either be viewed as a primitive hierarchy with a single root and just one level of children. Alternatively, hierarchical relations can be established via explicit or implicit keys in database columns.

Data exchanged by operators

Even primitive expressions result in operators that produce tuples. Example: the following expression (XQuery-syntax) collects the "date of creation" (a property called CreDtTM) in a structured message:

```
let $date := //Msg/Document/CreDtTm
```

The variable "$date" is bound to a set of date-values. If there is only one "Document" per message, there is only one value bound to "$date". If a message contains more than one document, there could be several dates. In the set of date-values, each value has a position within this set and a data-type. Thus tuples containing the date, its position and its data-type are provided by the operator taking care of this expression. Those tuples are passed to operators that need to process $date-values and/or the position or type of each value. The following example illustrates the exchange of data between the operators:

```
let $date := //Msg/Document/CreDtTm[2]
```

The compiler can transform this expression is internally to the following expressions:

```
let $date1 := //Msg/Document/CreDtTm

let $date := $date1[2]
```

This results in one operator providing CreDtTm-values and one filtering out the third value (starting with index 0). The second operator needs to access the value and its position. The second operator thus needs to have two position-mappings for the operator-to-operator connection. As additional values in the tuple produced, the operator provides the position in the resulting set (= the position of $date-values) and the data-type. In the example, at most one tuple is produced by the operator.

The input of an operator is always a single tuple. The operator itself might produce additional values other than position and data type. A concatenation operator for example, which concatenates two input strings and derives a single string (e.g. concatenating "Susan" and "Miller" to "Susan Miller" or "Miller, Susan") corresponds to a tuple [x1, x2, y], whereas x1 and x2 are the input terms and y is the result. The tuple [x1,x2] is extended to a tuple [x1, x2, y], while the resulting tuple is not created "physically" in terms of the means programming languages provided (arrays, lists or similar data structures).

As mentioned before, the data type of a term (the value at a certain position in a tuple) is passed as a separate value. For certain operators, such as the concatenation operation in the example above, this is always the same data type, independently of the input data. In other cases the data type might change dynamically. For the sake of efficiency, every data type is represented as an integer number.

Building tuples

Operators might require data from more than one input operator in a single step. However, the data must always be provided as a tuple. The tuples for the $result-variable in the following example are generated by an operator that takes the input of two other operators:

```
let $person := //Msg/Document/Person;

let $name := trim($person/name);

let $prename = trim($person/prename);

let $result := concat($name,", ",$prename);
```

The values for $name and $prename must be provided as a single tuple to be processed by the operator producing the $result-tuples. This is ensured by an intermediate operator and can be done in two different forms, depending on the information that is available for $name and $prename values for each $person-node.

If a schema is available, which defines a maximum-value of one $name-value and one $prename-value for each $person-value, then $name, $prename tuples are build by a "tuple collector". If the schema defines a certain order in which $name and $prename have to occur, then the "tuple collector" just collects the values in the expected order and passes a [$name, $prename]-tuple whenever it is complete. If no order is defined, the "tuple collector" stores any $name and $prename value it receives. Once a new $person-name is read (or the reading-process is finished), it passes the two values as a tuple, provided both values are set.

If any number of $name and $prename values should be expected for each $person node, a join- operator is used, comparable to join- operations in relational database systems. As input, the join- operator takes [$person, $name]-tuples on one side and [$person, $prename]- tuples on the other side and buffers them. The join- criteria is that person-nodes are equal. Since both sorts of tuples occur in a certain order, the join- operation can be simplified in order to avoid joining more tuples than necessary. The resulting operator can also be seen as "context- based" operator (see also "context- optimizations") . Instead of using the equality of $person- values as join- criteria, the operator is just reset any time a new $person- node occurs (= new context) . Resetting means that the internal buffers are cleared.

If the source is a relational database rather than a document, the operation can be performed within the database. In this case, several operations are merged into a single operation for an operator, that just accesses the database.

Building target structures

Target structures (the result of the transformation process) are represented by a certain type of tuple, very similar to source-data. Each tuple contains

■ the target node-identifier or primitive value,

■ the data type,

■ the position relative to the parent- or containing node.

This kind of tuple is generated by a target-operator. Every target-operator thus has to be provided the data listed above by its preceding operator(s).

Path-Normalization and Path-Matching in Source-Operators

Every path-expression is analyzed with respect to the data-types it might refer to. This is done as part of a static analysis in the compilation phase. As an example the following path-expression is considered:

```
$x := //a/descendant::b;
```

A static analysis reveals if the name-tests for nodes named "a" and "b" correlate with elements in the schema. There might be for example three distinct elements named "b" and no "any-element" (allowing any kind of node) in the given schema. In the compilation process, these elements are associated with numeric identifiers. The path-expression above is translated in to a pattern that uses the numeric identifiers. At runtime nodes and values read from a source data set are associated with element-identifiers by the reading process. In the subsequent processing after data has been read the identifiers can be used in a pattern-match.

In the case where there is no schema or the schema contains "any-elements", unknown elements need to be considered. In this case the name-test can not only be considered on elements defined within the schema. This is handled by introducing artificial elements outside the schema. In the example above this would be an artificial element named "b" that gets its own numeric identifier.

After transformation expressions have been normalized, the remaining path-expressions are restricted to a subset of the XPath standard. The subset includes child-, descendant- and descendant-or-self axes, which means that only "downwards"-steps are possible. Other axes are eliminated by introducing additional path-expressions and building permutations. Example:

```
$x := //a/descendant::b;

$y := $x/descendant::c;

$z := $y/ancestor::d;

$result = f($x,$y,$z);
```

If not prevented by schema-constraints, tuples of related values of $x, $y and $z can occur in two patterns:

**//A/\*/B/\*/D/\*/C** or **//A/\*/D/\*/B/\*/C** (whereas * represents any number of nodes). In other words, $z-nodes might be ancestors of values for $y only or ancestors for both, $x- and $y-nodes. As previously mentioned, a schema definition can exclude one of the patterns or both. This is subject to a static analysis in order to prevent the creation of patterns that can never match.

During normalization the ancestor-axis is eliminated by the following replacement:

```
$x1 := //a/descendant::b;

$z1 := $x/descendant::d;

$y1 := $z/descendant::c;



$x2 := //a/descendant::b;

$y2 := $z/descendant::c;

$z2 := $x/descendant::d;



[$x,$y,$z] := [$x1,$y1,$z1] UNION [$x2,$y2,$z2];
```

Note that the last expression again has no equivalent in XQuery. It is the union of the set of [$x1, $y1, $z1]- tuples and the set of [$x2, $y2, $z2]- tuples defined by other expressions.

The resulting path-operators are registered against all elements that are candidates for the pattern. This means, if a schema is given, a static analysis checks all branches within this schema where the pattern could match in principle. The respective source-operators receive tuple-events for all elements that appear in one of the branches. If no schema is given, the operators notified as long as the first part of the pattern matches the elements that have been read so far (the stack). To illustrate this we assume that a source-operator with the pattern **//A/B/*/C** has been registered. Whenever an node "A" and a subsequent node "B" is read (and the stack contains //A/B), the operator is notified for all subsequent tuples (nodes below the A-node). Whenever the next node on the same level as the "B"-node is read that is no "B" node, the operator does not receive subsequent tuple-events.

Source- operators receiving data perform a match against their pattern. In the most general case this match-procedure has to work with recursion and elements that can occur anywhere in a path. This is realized as follows:

■ the source operator keeps it's pattern according to the mentioned subset of path-expressions;

■ the source operator maintains a stack; whenever it receives a tuple, the tuple is put on the stack;

■ once the length of the stack exceeds a minimum making it possible for the pattern to match, the actual matching-procedure starts, based on a certain order in which values for variables can occur (due to normalization):

- it maintains a cursor for each variable that is part of the pattern;

- the procedure starts with the first cursor in the pattern, which represents the values being read first (in other words the $x1 or $x2-values in the example given above);

- the cursor is moved within the bounds given by the pattern;

- the procedure is repeated for all other cursors moving from upper to lower nodes (moving down the pattern).

To further illustrate the procedure the following expressions are considered:

```
$x := //a/descendant-or-self::b;

$y :=  $x/descendant-or-self::*;

$z :=  $y/descendant-or-self::d;
```

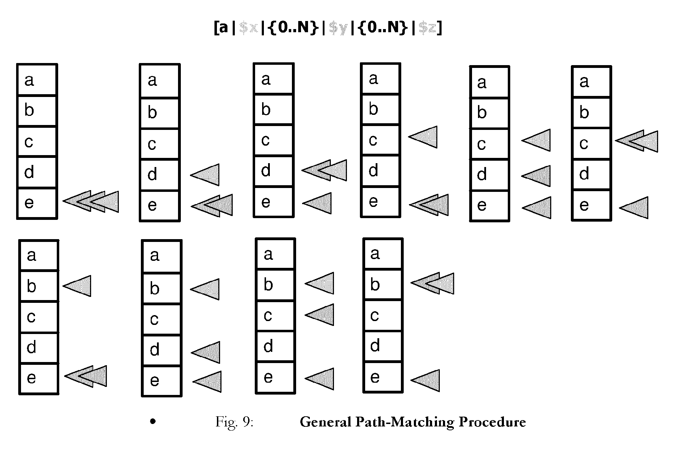

Figure 9 shows a general path matching procedure, e. g. the procedure when a path of nodes //a/b/c/d/e is on the stack. Note that the stack does not just maintain the element-types (like element "a") but also the actual id of the element.

As Figure 9 illustrates, there is an occurrence-constraint for nodes between the nodes for two variables that are "neighbours" in a path-pattern. For example, their might be zero to any number of nodes between nodes representing $x-values and nodes representing $y-values. Zero means that the nodes are the same. Based on this constraint, an upper and a lower bound for the cursor-iteration of each cursor can be calculated. During the iteration values that do not match the required element are omitted. All other values are included and passed as a tuple.

The procedure can be simplified if a schema is given and the static analysis excludes certain features such as recursion (see section "Optimizations").

General join-operations

Joins occur in different situations, such as the generation of tuples out of different source- operations (as described above) . To use another example, we assume a data structure with a node type "organization" that has an "identifier"-, a "name"- and an "address"- property. In a source data there is a collection of organizations, each with its unique identifier and a number of persons, each with a property "organization- identifer" pointing to the id of the organization to which the item belongs to. Assuming each person is to be collected together with the full information about the associated organization ([$person, $organization]- tuples), the different values need to be joined:

```
let $person := //Msg/Document/Person;

let $organizationId := $person/organizationID;

let $organization :=
            //Msg/Document/Organization[id = $or-
ganizationId];
```

This expression relates $organization and $person values.

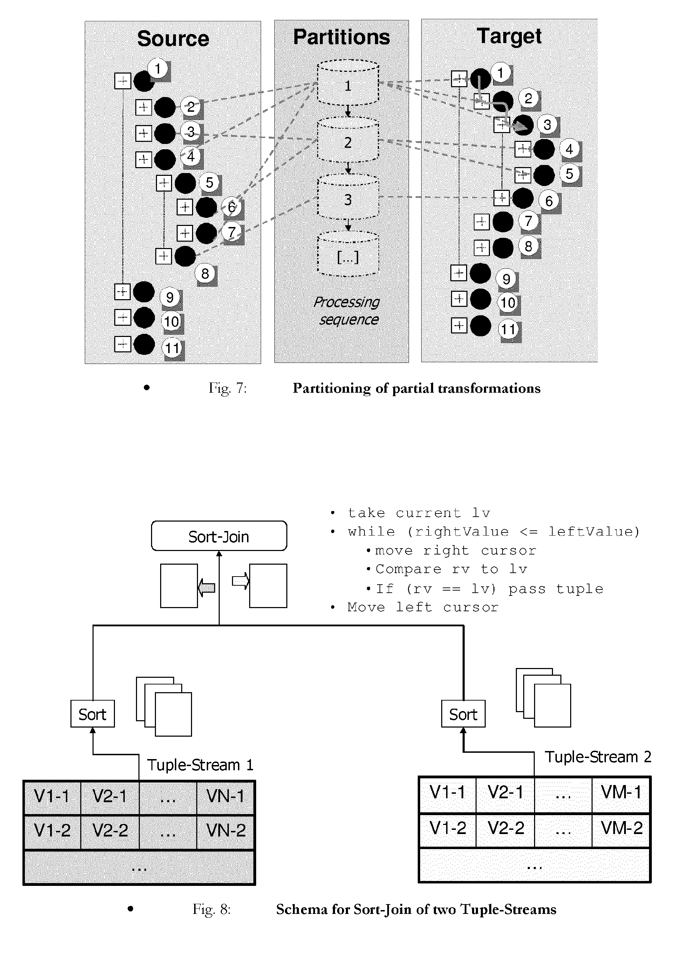

Figure 8 shows an example for a sort-join operator. The sort-join operator performs the source code given in Figure 8 in a loop-like manner. The source code is also depicted below:

- take current lv

- while (rightValue <= leftValue)

    - move right cursor

    - compare rv to lv

    - If (rv==lv) pass tuple

- Move left cursor

The expression represents a join-operator that is realized using well known join-algorithms like "sort-merge join". As other operations such as sorting this operation requires tuples to be buffered. To increase the speed of joins and other operations as well as to minimize buffering optimizations are applied (see next section).

Optimizations

The previous section describes a base setting to perform transformations. This section contains methods to increase the performance of transformations and reduce memory- and hard-disk consumption, based on the methods previously described.

Virtual Tuples

To make the evaluation-procedure more efficient, tuples are "virtualized". In priniciple every operator consumes and produces tuples. The most memory efficient representation of a tuple in common programming languages is an array. Thus every operator could consume a stream of arrays and produce a stream of arrays. However, this leads to the creation of many arrays and to the redundant referencing of values. Example:

```
let $person := //Msg/Document/Person;

let $personName := $person/name;

let $employee := $person[position='employee'];

let $employeeName := $employee/name;
```

Tuples [$person, $personName] can be provided by one operator, another operator filters the tuples to match the condition. [$employee, $employeeName]-tuples are a subset of the set of [$person, $personName]-tuples. However, internally the filtering operator needs three values, since the position-property is to be matched against the condition. The normalization-process introduces an additional expression (see previous section) such as:

```
let $employeePosition := $person/position;
```

The condition is changed to:

```
let $employee := $person with $employeePosi-
tion='employee';
```

Thus the filtering- operator receives [$person, $personName, $employeePosition]- tuples and produces [$person, $personName]- tuples. To optimize this process, the filtering operator just references passes the values it receives, rather than producing an array. This is realized as follows:

■ One operator provides $person, $personName and $employee-Position-values.

■ Whenever a [$person, $personName, $employeePosition]-tuple is complete, the subsequent filtering-operator is notified.

■ The filtering operator evaluates the condition. If it evaluates to 'true', subsequent operators are notified. The resulting [$employee, $employeeName]-tuple is provided based on an internal mapping that points to the $person and $personName values of the previous operator. The mapping uses the indices of an operator that associate a variable with a fixed position.

Only operators that buffer data need to create tuples in form of arrays. This includes sorting-operators and join-operators.

Exploiting the Reading Order and Cardinalities / Optimization of Buffering Operations

If a schema is available that provides information about the order in which data is provided, this information can be exploited by the compiler and at runtime. To illustrate the procedure the concatenation-examples is used again:

```
let $person := //Msg/Document/Person;

let $name := trim($person/name);

let $prename = trim($person/prename);

let $result := concat($name,", ",$prename);
```

The concat function works on pairs (=tuples) of related $name and $prename values. A special operator is responsible to build [$name, $prename]-tuples. In the general case this operator has to buffer $name and $prename-values until the $person-context changes (new $person-node is read). For every $person-value it has to provide the respective tuples.

However, if a schema is available from which a strict reading order can be derived, this process is optimized. If "name" is read always before "prename" is read and both occur at most once per person then only "name" has to be buffered. Any time "prename" is read, it can be delivered with "name" as a tuple. If no "name" has been read before, the tuple is known to be incomplete.

Static Analysis of Path-Expressions

As an illustrating example the following path-expression is considered:

```
//a/descendant-or-self::b/descendant-or-self::*
```

The path is recursive if elements 'a' can be descendants of elements 'b'. If due to schema- constraints this kind of recursion can be excluded (also for any other element entailed by this path- expression), a simpler strategy can be used to check the path. Starting from right to left a given path can be matched against the expression step by step.

If the path-expression is associated with a schema and does not entail elements of type "ANY", in other words if the expression can be transformed into a finite set of full qualified expressions like /a/b/c, /a/b/d etc. whereas a, b, etc. represent defined data types then matching process can be further simplified. This simplification uses a static analysis of the transformation which calculates the set of data types (schema-defined types) the expression entails. Each data type is represented by a numeric id which is in turn used as an index. In the simplest case, when recursion can be excluded and no "any-elements" are given, a very simple and fast method can be used to match the given pattern. Whenever a tuple is read form the data source that has a data type associated a simple and fast look-up can be performed to feed the operator representing the path-expression if applicable.

**EP 2 648 115 A1**

Delegating Operations to a Database

Relying on operations based on tuple-streams allows the compiler and the operators to delegate operations to an underlying database, if it is a source of a transformation. Many operations such as filters and joins can be expressed using SQL-statements. To exploit the capabilities of an underlying database the compiler generates SQL-expressions comprising one ore more transformation expressions and attaches them to source-operators for database-access. Additional operators are only needed for the operations a database cannot perform such as the serialization into a target-document, the combination with data not contained in the database or the application of functions not available in the database.

Partitioning

The invention described allows the parallel execution of different parts of the transformation. This is realized based on different transformation partitions, as illustrated in Figure 7. A partition contains a part of the transformation that builds a complete sub-tree. At runtime the resulting sub-trees can be build independently of each other in a separated process.

**Claims**

1. A method to execute transformations for hierarchically structured documents or data sets stemming from a relational database system based on a declarative transformation expressions containing at least the following steps:

   a) Compiling a set of transformation expressions into a set of normalized expressions with reduced expressivity;
   b) Transforming the normalized expressions into a set of pre-configured interconnected standard-operators;
   c)

      (i) For hierarchical documents: Reading a document and transforming it into a tuple-stream;
      (ii) for relational databases: Transforming parts of the transformation;

   d) Passing tuple-streams between the operators and filter, transform and generate tuples in order to produce a result according to the transformation defined at compile time;
   e) Ordering the tuple-stream and serializing it to a desired target-format and target-structure.

2. The method according to claim 1 the sets of tuples including type- and position-data.

3. The method according to claim 1 further including the step normalizing path-expressions by eliminating side-ways movements and externalizing inline filter-expressions.

4. The method according to claim 1 further including the step of generating a stream of tuples out of hierarchical documents using an event-based approach whereas each tuple is associated with a data type which can be:

   - explicitly defined by a schema
   - implicitly defined by a path-expression.

5. The method according to one of the preceding claims further eliminating references to data-types (associations of data sets with types) using strings by replacing them with numeric identifiers.

6. The method according to one of the preceding claims further registering the operators against a normalized form of path-expression

7. The method according to one of the preceding claims further including a pattern-match and check if a registered operator is to be notified about tuples it should receive.

8. The method according to claim 7, the pattern match including a check for recursive path-patterns.

9. The method according to one of the previous claims, further analyze a transformation definition at compile-time and optimize the pattern match according for path-expressions that are known to exclude recursion.

16

**10.** The method according to one of the preceding claims further optimizing the exchange of data between operators and generating tuples of different arities (lengths) using a combination of a push- and a pull-approach.

**11.** The method according to one of the preceding claims further to using "virtual" tuples for the exchange of data between operators according to avoid the use of unnecessary resource consumption.

**12.** The method according to one of the preceding claims further delegating parts of the transformation to the underlying database if the source input is a relational database.

**13.** The method according to one of the preceding claims further optimizing join-operations by exploiting the reading order of hierarchical documents.

**14.** The method according to one of the preceding claims further optimizing the amount of buffering of tuples stemming from a tuple-stream into memory or on disk by exploiting the information available through a schema.

**15.** A transformation system to execute data transformations particularly according to one of claims 1 to 14 including:

a) A transformation interpreter comprising a compiler, readers for documents, a database connector, standard operators to read, filter and generate tuples and a runtime container managing all components mentioned apart from the compiler,
b) A compiler generating a set of interconnected operators out of a transformation definition,
c) As part of the compiler a generator for SQL-expressions out of transformation expressions and
d) A set of readers capable of generating tuple-streams out of hierarchical documents.

**16.** The transformation system according to claim 15, the readers including at least a reader for XML-documents, a reader for delimiter-based documents including EDIFACT and ANSI X12 and a reader for fixed-length formats including VDA and typical inhouse formats.

**17.** A computer program for the operationalization of the method according to in claims 1 to 14.

**18.** A data carrier adapted to store a computer program according to the claim 17.

## Source-Schema I

## Target-Schema

Design-time („offline"):
- define and use schemas
- define transformation rules
  with derived variables
- validate transformation rules

Source-Messages

Runtime („online"):
- translate transformation rules
  to logical rules
- translate logical rules to
  operator tree
- transform ingoing message-
  stream from source to target

Target-Messages

Fig. 1: **Transformation of messages with hierarchical data structures**

**Compiler**

**Interpreter**

Op1

*operators*

Op3

Op2 → Op4

**Transformation
Expressions**
[XQuery/Rules]

**Input Data**
[RDBMS/File]

**Output Data**
[RDBMS/File]

Fig. 2: **Compiler and interpreter: The compiler takes a set of transformation expressions and generates/configures an interpreter which contains a set of inter-connected operators; the interpreter transforms input data upon request**

EP 2 648 115 A1

- Fig. 3: **Processing schema**

- Fig. 4: **Processing sequence for hierarchical data**

## Schema

## Data Set

## Tuples

value – parent – type - position

1 - 0 - t1 - 0 - 0

2 - 1 - t2 - 0 - 0

3 - 1 - t2 - 0 - 1

4 - 1 - t3 - 0 - 0

5 - 4 - t4 - 0 - 0

6 - 4 - t5 - 0 - 1

7 - 1 - t3 - 0 - 0

8 - 7 - t4 - 0 - 0

9 - 7 - t5 - 0 - 1

10 - 4 - t4 - 0 - 0

•     Fig. 5:     **Processing of hierarchical data sets as tuple-stream; t1, t2, ... represent types; each tuple contains an identifier for the node, the identifier for the parent-node (whereas the data set itself has the identifier 0), the type and the position relative to the parent**

Position-mappings

Operator 1

$x_1$ | ... | $x_n$ | $y_1$ | .. | $y_n$

input-tuple    output-tuple

Operator 2

$x_1$ | ... | $x_n$ | $y_1$ | .. | $y_n$

input-tuple    output-tuple

•     Fig. 6:     **Exchange of data between operators using position mappings**

EP 2 648 115 A1

Fig. 7:    **Partitioning of partial transformations**

- take current lv
- while (rightValue <= leftValue)
    - move right cursor
    - Compare rv to lv
    - If (rv == lv) pass tuple
- Move left cursor

Fig. 8:    **Schema for Sort-Join of two Tuple-Streams**

21

EP 2 648 115 A1

**[a | $x |{0..N} | $y |{0..N} | $z]**

Fig. 9: **General Path-Matching Procedure**

22

Europäisches
Patentamt

European
Patent Office

Office européen
des brevets

# EUROPEAN SEARCH REPORT

**Application Number**

EP 12 16 2971

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/198055 A1 (MIHAILA GEORGE A [US] ET AL MIHAILA GEORGE ANDREI [US] ET AL) 8 September 2005 (2005-09-08) <br> * paragraph [0032] - paragraph [0035] * <br> * paragraph [0012] - paragraph [0020] * <br> * paragraph [0069] - paragraph [0078] * <br> ----- | 1-18 | INV. <br> G06F17/30 |
| X | WO 03/107222 A1 (CERISENT CORP [US]) 24 December 2003 (2003-12-24) <br> * paragraph [0035] - paragraph [0046] * <br> ----- | 1-18 | |
| X | EP 1 492 034 A2 (MICROSOFT CORP [US]) 29 December 2004 (2004-12-29) <br> * paragraph [0042] - paragraph [0043] * <br> * paragraph [0006] - paragraph [0007] * <br> ----- | 1-18 | |
| A | DUNREN CHE ET AL: "Query optimization in XML structured-document databases", THE VLDB JOURNAL ; THE INTERNATIONAL JOURNAL ON VERY LARGE DATA BASES, SPRINGER, BERLIN, DE, vol. 15, no. 3, 28 April 2006 (2006-04-28), pages 263-289, XP019431190, ISSN: 0949-877X, DOI: 10.1007/S00778-005-0172-6 <br> * the whole document * <br> ----- | 1-18 | |
| | | | **TECHNICAL FIELDS SEARCHED (IPC)** <br><br> G06F |

The present search report has been drawn up for all claims

| Place of search | Date of completion of the search | Examiner |
|---|---|---|
| Munich | 22 April 2013 | San-Bento Furtado, P |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

..............................................................................

& : member of the same patent family, corresponding document

EPO FORM 1503 03.82 (P04C01)

EP 2 648 115 A1

**ANNEX TO THE EUROPEAN SEARCH REPORT
ON EUROPEAN PATENT APPLICATION NO.**

EP 12 16 2971

This annex lists the patent family members relating to the patent documents cited in the above-mentioned European search report.
The members are as contained in the European Patent Office EDP file on
The European Patent Office is in no way liable for these particulars which are merely given for the purpose of information.

22-04-2013

| Patent document cited in search report | | Publication date | Patent family member(s) | | Publication date |
|---|---|---|---|---|---|
| US 2005198055 | A1 | 08-09-2005 | NONE | | |
| WO 03107222 | A1 | 24-12-2003 | AU | 2003245506 A1 | 31-12-2003 |
| | | | EP | 1552427 A1 | 13-07-2005 |
| | | | EP | 2562663 A2 | 27-02-2013 |
| | | | US | 2004073541 A1 | 15-04-2004 |
| | | | US | 2007168327 A1 | 19-07-2007 |
| | | | US | 2010161584 A1 | 24-06-2010 |
| | | | WO | 03107222 A1 | 24-12-2003 |
| EP 1492034 | A2 | 29-12-2004 | CN | 1609855 A | 27-04-2005 |
| | | | EP | 1492034 A2 | 29-12-2004 |
| | | | JP | 2005018767 A | 20-01-2005 |
| | | | KR | 20050000328 A | 03-01-2005 |
| | | | US | 2005004892 A1 | 06-01-2005 |

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1990741 A1
- EP 1986108 A1

- US 7149746 B